(19) Europäisches Patentamt
European Patent Office
Office européen des brevets

(11) **EP 4 438 642 A1**

(12) **EUROPEAN PATENT APPLICATION**
published in accordance with Art. 153(4) EPC


(43) Date of publication:
**02.10.2024 Bulletin 2024/40**

(21) Application number: **22898628.7**

(22) Date of filing: **24.11.2022**

(51) International Patent Classification (IPC):
***C08F 222/40*** *(2006.01)* ***C08L 35/00*** *(2006.01)*
***H01G 11/56*** *(2013.01)* ***H01M 10/0565*** *(2010.01)*

(52) Cooperative Patent Classification (CPC):
**C08F 222/40; C08L 33/24; C08L 35/00; H01G 11/56; H01M 10/0565;** Y02E 60/10

(86) International application number:
**PCT/JP2022/043418**

(87) International publication number:
**WO 2023/095846 (01.06.2023 Gazette 2023/22)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **24.11.2021 JP 2021190331**



(71) Applicants:
- **Sumitomo Chemical Company, Limited**
  **Tokyo 103-6020 (JP)**
- **Kyoto University**
  **Kyoto-shi, Kyoto 606-8501 (JP)**

(72) Inventors:
- **NAKAJIMA, Hideto**
  **Niihama-shi, Ehime 792-8521 (JP)**
- **SUWA, Koki**
  **Niihama-shi, Ehime 792-8521 (JP)**
- **OUCHI, Makoto**
  **Kyoto-shi, Kyoto 606-8501 (JP)**
- **YAMADA, Izumi**
  **Kyoto-shi, Kyoto 606-8501 (JP)**

(74) Representative: **Vossius & Partner**
**Patentanwälte Rechtsanwälte mbB**
**Siebertstrasse 3**
**81675 München (DE)**


(54) **POLYMER, METHOD FOR PRODUCING POLYMER, ELECTROLYTE COMPOSITION, AND BATTERY**


(57) Provided is a polymer including: a structural unit (A) represented by the following formula (A); and a second structural unit represented by the following formula (B 1) or (B2), in which a ratio m of the structural unit (A) to total structural units in the polymer is 0.2 to 0.8, and a ratio n of the second structural unit thereto is 0.2 to 0.8.

[Chem. 1]

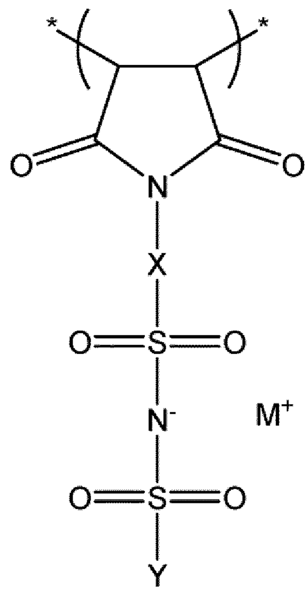

(A)



(Cont. next page)

(In formula (A), X is a divalent group, Y is a monovalent group, and M is an alkali metal element.)

[Chem. 2]

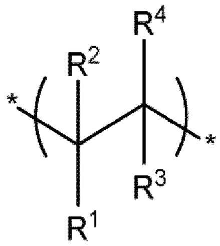

(B1)

(In formula (B1), $R^1$ to $R^4$ are each a hydrogen atom or a monovalent group.)

[Chem. 3]

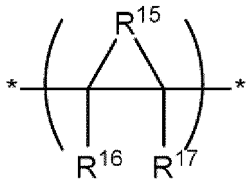

(B2)

(In formula (B2), $R^{15}$ is a divalent group, and $R^{16}$ and $R^{17}$ are each a hydrogen atom or a monovalent group.)

## Description

### Technical Field

The present disclosure relates to a polymer, a method for producing a polymer, an electrolyte composition, and a battery.

### Background Art

Studies on lithium-ion batteries and the like have been in progress actively because of their high capacity. Although lithium salt solutions containing organic solvents or ionic liquids are known as electrolytes for lithium-ion batteries, studies on solid electrolytes have been in progress from the viewpoints of safety and processability. Among them, polymers containing lithium ions have been attracting attention for the following reasons (Patent Literature 1 and Non-Patent Literature 1 and 2).

In other words, since polymers containing lithium ions are highly flexible, they have an advantage that it is easy to make contact within a solid electrolyte and at an interface with an electrode. In addition, polymers containing lithium ions can have counter anions of the lithium ions as functional groups of the polymers, so that the anions are fixed to the polymers to suppress movement of ions other than the lithium ions during charging and discharging, substantially making only the lithium ions be used as a single charge (in other words, used as a single ion conductor (SIC)).

### Citation List

### Patent Literature

[Patent Literature 1] Chinese Unexamined Patent Publication No. 108878777

### Non-Patent Literature

[Non-Patent Literature 1] Li et al., "Single Ion Conducting Lithium Sulfur Polymer Batteries with Improved Safety and Stability," Journal of Materials Chemistry A, 2018, 6, pp. 14330-14338

[Non-Patent Literature 2] Du et al., "Water-Insoluble Side-Chain-Grafted Single Ion Conducting Polymer Electrolyte for Long-Term Stable Lithium Metal Secondary Batteries," ACS Applied Energy Materials, 2020, 3, pp. 1128-1138

### Summary of Invention

### Technical Problem

However, oxidation potentials of polymers containing lithium ions in Patent Literature 1 and Non-Patent Literature 1 and 2 are about 4.4 V, and there is room for improvement in voltage resistance on the oxidation side. To combine with higher potential electrodes, it is desirable to develop a polymer with superior voltage resistance on the oxidation side.

The present disclosure has been made in consideration of the above-described circumstances, and an object of the present disclosure is to provide a polymer having excellent voltage resistance on the oxidation side. In addition, it is also an object of the present disclosure to provide a method for producing a polymer having excellent voltage resistance on the oxidation side. Furthermore, it is also an object of the present disclosure to provide a battery and electrolyte composition containing such a polymer.

### Solution to Problem

A polymer of the present disclosure includes: a first structural unit which is at least one structural unit (A) represented by the following formula (A); and a second structural unit which is at least one of a structural unit (B 1) represented by the following formula (B 1) and a structural unit (B2) represented by the following formula (B2), in which the polymer satisfies at least one of the following conditions (1) and (2).

(1) A ratio m of the first structural unit to total structural units in the above polymer is 0.2 to 0.8, and a ratio n of the second structural unit to the total structural units in the polymer is 0.2 to 0.8.

(2) A content of the first structural unit is 25 to 95 mass% and a content of the second structural unit is 5 to 75 mass%

based on the total mass of the polymer.

[Chem. 1]

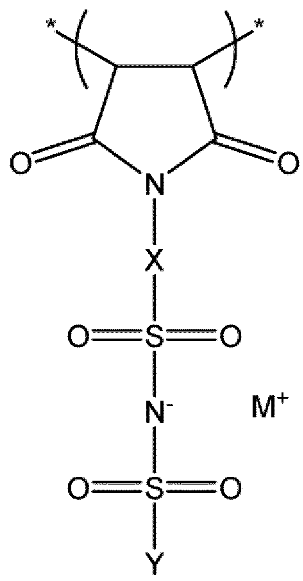

(A)

(In formula (A), X is a divalent organic group having 1 to 20 carbon atoms, Y is a halogen atom or a monovalent organic group having 1 to 20 carbon atoms, M is an alkali metal element selected from Li, Na, and K, and * represents a position where the structural unit (A) is bound to another structural unit.)

[Chem. 2]

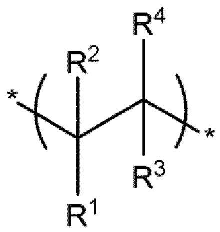

(B1)

(In formula (B1), $R^1$ to $R^4$ are each independently a hydrogen atom, a halogen atom, or a monovalent organic group having 1 to 20 carbon atoms, and * represents a position where the structural unit (B1) is bound to another structural unit.)

[Chem. 3]

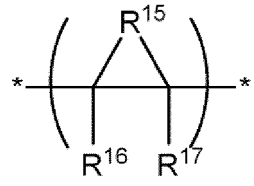

(B2)

(In formula (B2), $R^{15}$ is a divalent organic group having 1 to 20 carbon atoms, and $R^{16}$ and $R^{17}$ are each a hydrogen atom, a halogen atom, or a monovalent organic group having 1 to 20 carbon atoms, with the proviso that a structural unit in which $R^{15}$ is -C(=O)-O-C(=O)- and both $R^{16}$ and $R^{17}$ are hydrogen atoms, and a structural unit in the structural unit (A) are not in the structural unit (B2).)

It is preferable that the molar ratio of a structural unit (C) represented by the following formula (C) to the first structural unit in the polymer be 5/95 or less.

[Chem. 4]

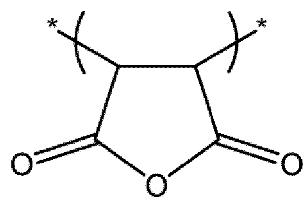

(C)

It is preferable that an oxidation potential of the above polymer be 4.5 V or higher with respect to a $Li/Li^+$ electrode.

It is preferable that the second structural unit contain a structural unit (D) represented by the following formula (D).

[Chem. 5]

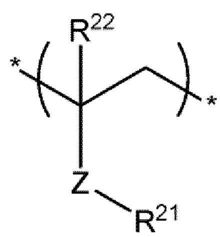

(D)

(Z is a covalent bond, -O-, -S-, -C(=O)-, or -C(=O) O-), $R^{22}$ is a hydrogen atom or a monovalent hydrocarbon group, $R^{21}$ is a monovalent organic group, and * represents a position where the structural unit (D) is bound to another structural unit.)

It is preferable that the molar ratio of the structural unit (A) to the total number of moles of the structural unit (A) and the structural unit (B1) be more than 0.40.

A polymer of the present disclosure includes: a structural unit (A) represented by the following formula (A), in which the molar ratio of a structural unit (C) represented by the following formula (C) to the structural unit (A) in the above polymer may be 5/95 or less.

[Chem. 6]

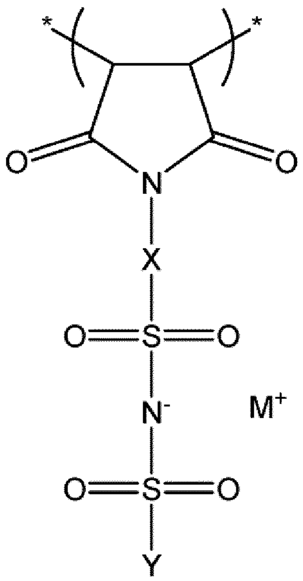

(A)

(In formula (A), X is a divalent organic group having 1 to 20 carbon atoms, Y is a halogen atom or a monovalent organic group having 1 to 20 carbon atoms, M is an alkali metal element selected from Li, Na, and K, and * represents a position where the structural unit (A) is bound to another structural unit.)

[Chem. 7]

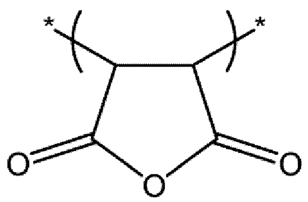

(C)

An electrolyte composition of the present disclosure includes the above polymer.

It is preferable that the above electrolyte composition further include a plasticizer.

It is preferable that the above plasticizer be an organic solvent.

A battery of the present disclosure includes the above polymer or the above electrolyte composition.

A method for producing a polymer of the present disclosure includes: a step of polymerizing monomers including a monomer (A') represented by the following formula (A') and a second monomer including at least one of a monomer (B1') represented by the following formula (B1') and a monomer (B2') represented by the following formula (B2').

[Chem. 8]

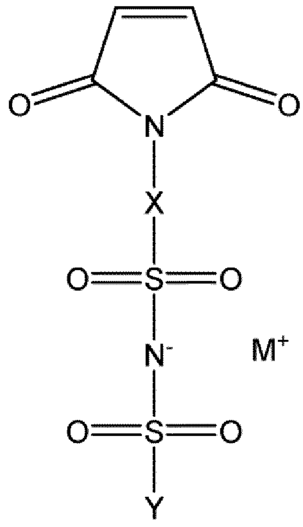

(A')

(In formula (A'), X is a divalent organic group having 1 to 20 carbon atoms, Y is a halogen atom or a monovalent organic group having 1 to 20 carbon atoms, and M is an alkali metal element selected from Li, Na and K.)

[Chem. 9]

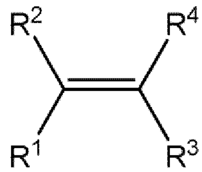

(B1')

(In formula (B1'), $R^1$ to $R^4$ are each independently a hydrogen atom, a halogen atom, or a monovalent organic group having 1 to 20 carbon atoms.)

[Chem. 10]

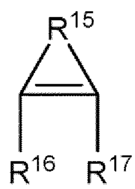

(B2')

(In formula (B2'), $R^{15}$ is a divalent organic group having 1 to 20 carbon atoms, and $R^{16}$ and $R^{17}$ are each a hydrogen atom, a halogen atom, or a monovalent organic group having 1 to 20 carbon atoms, with the proviso that maleic anhydride and a monomer in the above monomer (A') are not in the monomer (B2')).

A polymer of the present disclosure may be obtained by polymerizing monomers including a monomer (A')

represented by the following formula (A') and a second monomer including at least one of a monomer (B1') represented by the following formula (B1') and a monomer (B2') represented by the following formula (B2').

[Chem. 11]

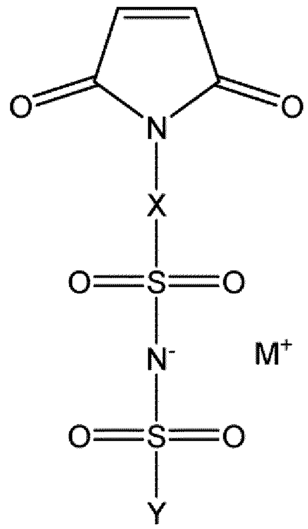

(A')

(In formula (A'), X is a divalent organic group having 1 to 20 carbon atoms, Y is a halogen atom or a monovalent organic group having 1 to 20 carbon atoms, and M is an alkali metal element selected from Li, Na and K.)

[Chem. 12]

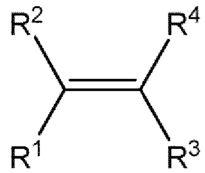

(B1')

(In formula (B1'), $R^1$ to $R^4$ are each independently a hydrogen atom, a halogen atom, or a monovalent organic group having 1 to 20 carbon atoms.)

[Chem. 13]

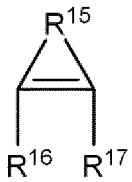

(B2')

(In formula (B2'), $R^{15}$ is a divalent organic group having 1 to 20 carbon atoms, and $R^{16}$ and $R^{17}$ are each a hydrogen atom, a halogen atom, or a monovalent organic group having 1 to 20 carbon atoms, with the proviso that maleic

anhydride and a monomer in the above monomer (A') are not in the monomer (B2').)

Advantageous Effects of Invention

According to the present disclosure, it is possible to provide a polymer having excellent voltage resistance on the oxidation side. In addition, according to the present disclosure, it is also possible to provide a method for producing a polymer having excellent voltage resistance on the oxidation side. Furthermore, according to the present disclosure, it is also possible to provide a battery and electrolyte composition containing such a polymer.

**Description of Embodiments**

(First embodiment)

Provided is a polymer including: a first structural unit which is a structural unit (A) represented by the following formula (A); and a second structural unit which is at least one of a structural unit (B 1) represented by the following formula (B 1) and a structural unit (B2) represented by the following formula (B2), in which the polymer satisfies at least one of the following conditions (1) and (2).

(1) A ratio m of the first structural unit to total structural units in the above polymer is 0.2 to 0.8, and a ratio n of the second structural unit to the total structural units in the polymer is 0.2 to 0.8.
(2) A content of the first structural unit is 25 to 95 mass% and a content of the second structural unit is 5 to 75 mass% based on the total mass of the polymer.

[Chem. 14]

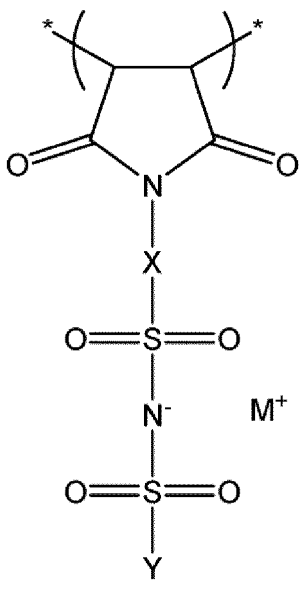

(A)

(In formula (A), X is a divalent organic group having 1 to 20 carbon atoms, Y is a halogen atom or a monovalent organic group having 1 to 20 carbon atoms, M is an alkali metal element selected from Li, Na, and K, and * represents a position where the structural unit (A) is bound to another structural unit.)

[Chem. 15]

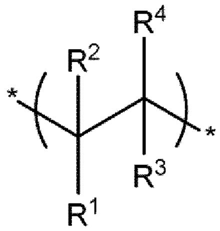

(B1)

(In formula (B1), $R^1$ to $R^4$ are each independently a hydrogen atom, a halogen atom, or a monovalent organic group having 1 to 20 carbon atoms, and * represents a position where the structural unit (B1) is bound to another structural unit.)

[Chem. 16]

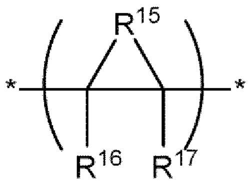

(B2)

(In formula (B2), $R^{15}$ is a divalent organic group having 1 to 20 carbon atoms, and $R^{16}$ and $R^{17}$ are each a hydrogen atom, a halogen atom, or a monovalent organic group having 1 to 20 carbon atoms, with the proviso that a structural unit in which $R^{15}$ is -C(=O)-O-C(=O)- and both $R^{16}$ and $R^{17}$ are hydrogen atoms, and a structural unit in the structural unit (A) are not in the structural unit (B2).)

Such a polymer has high voltage resistance on the oxidation side.

m is preferably 0.3 to 0.7 and more preferably 0.4 to 0.6. n is preferably 0.3 to 0.7 and more preferably 0.35 to 0.65.

A value of m/(m+n) is preferably more than 0.40, more preferably 0.41 or more, still more preferably 0.45 or more, and particularly preferably 0.45 to 0.65.

There is no problem as long as the sum of m and n is 1 or less. For example, it may be 0.5 to 0.95 or 0.6 to 0.90.

The content of the structural unit (A) in the total mass of the polymer may be 40 to 90 mass% or 50 to 90 mass%. The content of the second structural unit in the total mass of the polymer may be 10 to 60 mass% or 10 to 50 mass%. The total content of the structural unit (A) and the second structural unit in the total mass of the polymer may be 90 mass% or more, 95 mass%, or 98 mass% or more.

The content of the structural unit (B1) in the total mass of the polymer may be 10 to 60 mass% or 10 to 50 mass%. The total content of the structural unit (A) and the structural unit (B1) in the total mass of the polymer may be 90 mass% or more, 95 mass%, or 98 mass% or more.

The molar ratio of the structural unit (A) to the total number of moles of the structural unit (A) and the structural unit (B1) in the polymer is preferably more than 0.40, more preferably 0.41 or more, still more preferably 0.45 or more, and particularly preferably 0.45 to 0.65.

As X, there is no restriction, and it may be a hydrocarbon group or a group with a heteroatom or may have a heterocyclic ring. More specific examples of X include a divalent group such as a hydrocarbon group or a group having a chemical structure in which one or more carbon atoms (methylene groups) in the hydrocarbon group are substituted by a linking group such as -O-, -S-, -C(=O)-, or -C(=O)O-. If there are a plurality of linking groups, the linking groups are not adjacent to each other. In addition, the above divalent group may have substituents substituting hydrogen atoms bound to carbon atoms. Substituents may be monovalent substituents, and examples thereof include halogen atoms. The above hydrocarbon group is not particularly limited and may be an aliphatic hydrocarbon group or an aromatic hydrocarbon group. The aliphatic hydrocarbon group may be any of a linear hydrocarbon group, a branched hydrocarbon

group, and a cyclic hydrocarbon group. In addition, the hydrocarbon group may be either a saturated hydrocarbon group or an unsaturated hydrocarbon group. X may be bound to one or both of nitrogen atoms of two maleimide groups and sulfur atoms of sulfonyl groups by the carbon atoms possessed by X.

In the present specification, the aromatic hydrocarbon group is a group containing an aromatic moiety and may have an aliphatic moiety. In addition, the cyclic hydrocarbon group in the present specification is a group containing a cyclic hydrocarbon moiety and may contain a linear or branched hydrocarbon moiety.

The number of carbon atoms possessed by X may be 1 to 15, 2 to 10, or 3 to 8. X may be a group having an aromatic ring or a group having an aromatic carbon ring such as a benzene ring. Substituents such as alkyl groups, halogen atoms, and electron-withdrawing groups may be bound to carbon atoms that are ring members of the carbon ring. The hydrocarbon group as X is preferably a phenylene group, an alkylene group having 1 to 8 carbon atoms, a polyoxyalkylene group, or a group in which some or all of hydrogen atoms bound to the carbon atoms possessed by these groups are substituted with halogen atoms such as fluorine atoms, and more preferably a phenylene group or a substituted phenylene group substituted with an alkyl group, a halogen atom, an electron-withdrawing group, or the like. Examples of electron-withdrawing groups include halogen atoms, sulfonic acid groups or salts thereof, sulfonic acid esters, nitro groups, and nitrile groups.

In formula (A), when Y is a monovalent organic group, the organic group is not particularly limited and may be a hydrocarbon group or a group having a heteroatom, or may have a heterocyclic ring. More specific examples of Y include a monovalent group such as a hydrocarbon group or a group having a chemical structure in which one or more carbon atoms (methylene groups) in the hydrocarbon group are substituted by a linking group such as -O-, -S-, -C(=O)-, or -C(=O) O-. If there are a plurality of linking groups, the linking groups are not adjacent to each other. In addition, the above monovalent group may have substituents substituting hydrogen atoms bound to carbon atoms. Substituents may be monovalent substituents, and examples thereof include halogen atoms. The above hydrocarbon group is not particularly limited and may be an aliphatic hydrocarbon group or an aromatic hydrocarbon group. The aliphatic hydrocarbon group may be any of a linear hydrocarbon group, a branched hydrocarbon group, and a cyclic hydrocarbon group. In addition, the hydrocarbon group may be either a saturated hydrocarbon group or an unsaturated hydrocarbon group.

The number of carbon atoms possessed by Y may be 1 to 15, 1 to 10, 1 to 8, 1 to 5, or 1 to 3. The hydrocarbon group as Y is preferably a phenyl group, an alkyl group having 1 to 5 carbon atoms, or a group in which some or all of hydrogen atoms bound to carbon atoms possessed by these groups are substituted with halogen atoms such as fluorine atom, more preferably a fluorinated alkyl group having 1 to 5 carbon atoms, and still more preferably a fluorinated alkyl group such as a trifluoromethyl group having 1 to 3 carbon atoms. The fluorinated alkyl group may be a perfluorinated alkyl group. When Y is a halogen atom, as the halogen atom, a fluorine atom or a chlorine atom is preferable and a fluorine atom is more preferable.

In formula (A), $M^+$ is an alkali metal ion, preferably a lithium ion ($Li^+$), a sodium ion ($Na^+$), or a potassium ion ($K^+$), and more preferably a lithium ion. $M^+$ may include two or three ions of $Li^+$, $Na^+$, and $K^+$, but it is preferred to include substantially only a single ion.

In formula (B1), $R^1$ to $R^4$ may be the same as or different from each other. When at least one of $R^1$ to $R^4$ is a monovalent organic group, the organic group is not particularly limited and may be a hydrocarbon group or a group having a heteroatom, or may have a heterocyclic ring. More specific examples of $R^1$ to $R^4$ include a monovalent group such as a hydrocarbon group or a group having a chemical structure in which one or more carbon atoms (methylene groups) in the hydrocarbon group are substituted by a linking group such as -O-, -S-, -C(=O)-, or -C(=O) O-. If there are a plurality of linking groups, the linking groups are not adjacent to each other. In addition, the above monovalent group may have substituents substituting hydrogen atoms bound to carbon atoms. Examples of substituents include halogen atoms. The above hydrocarbon group is not particularly limited and may be an aliphatic hydrocarbon group or an aromatic hydrocarbon group. The aliphatic hydrocarbon group may be any of a linear hydrocarbon group, a branched hydrocarbon group, and a cyclic hydrocarbon group. In addition, the hydrocarbon group may be either a saturated hydrocarbon group or an unsaturated hydrocarbon group.

At least one of $R^1$ to $R^4$ is preferably a hydrogen atom, two or more thereof are preferably hydrogen atoms, and three of them are preferably hydrogen atoms. When at least one of $R^1$ to $R^4$ is a halogen atom, as the halogen atom, a chlorine atom or a fluorine atom is preferable and a fluorine atom is more preferable.

Examples of monovalent organic groups include groups represented by the formula: -Z-R. Here, Z is a covalent bond, -O-, -S-, -C(=O)-, or -C(=O) O -, and R is a monovalent organic group. At least one of $R^1$ to $R^4$ may be a group represented by -Z-R. When Z is other than a covalent bond, R is a group bound to Z by a carbon atom possessed by R. When Z is a covalent bond, R is a group bound directly to a carbon atom of an ethylene moiety in formula (B1) by the carbon atom possessed by R.

The number of carbon atoms possessed by R is preferably 1 to 18, more preferably 2 to 15, and still more preferably 3 to 13.

R may be a substituted or unsubstituted hydrocarbon group or a group represented by formula: $-(R^{24}O)_k-R^{25}$. Examples of hydrocarbon groups include groups, such as linear or branched alkyl groups, cyclohexyl groups, and benzyl

groups, having a carbon ring (which may be either aliphatic or aromatic). Examples of substituted hydrocarbon groups include those in which some or all of hydrogen atoms possessed by the above hydrocarbon groups are substituted with halogen atoms (fluorine atoms are preferable).

In the formula, k may be 1-6, 1-5, or 1-4. $R^{24}$ may be a substituted or unsubstituted alkylene group having 1 to 3 carbon atoms, and may be an ethylene group. In a case where there are a plurality of $R^{24}$'s, $R^{24}$'s may all be the same, or may be two or more alkylene groups. When $R^{24}$ is a substituted alkylene group, $R^{24}$ is preferably one in which a hydrogen atom of the alkylene group exemplified when $R^{24}$ is an alkylene group is substituted by a substituent. The substituent may be a halogen atom such as a fluorine atom.

$R^{25}$ may be a substituted or unsubstituted hydrocarbon group having 1 to 6 carbon atoms, a substituted or unsubstituted alkyl group having 1 to 4 carbon atoms, a substituted or unsubstituted alkyl group having 1 to 3 carbon atoms, a substituted or unsubstituted ethyl group, or a substituted or unsubstituted methyl group. When $R^{25}$ is a substituted hydrocarbon group, $R^{25}$ is preferably one in which a hydrogen atom of the hydrocarbon group exemplified when $R^{25}$ is a hydrocarbon group is substituted by a substituent. The substituent may be a halogen atom such as a fluorine atom.

When R is a hydrocarbon group, the hydrocarbon group may be either an aliphatic hydrocarbon group or an aromatic hydrocarbon group. The aliphatic hydrocarbon group may be any of a linear hydrocarbon group, a branched hydrocarbon group, and a cyclic hydrocarbon group. In addition, the hydrocarbon group may be either a saturated hydrocarbon group or an unsaturated hydrocarbon group. Specific examples of R include a methyl group, an ethyl group, an n-propyl group, an isopropyl group, an n-butyl group, an isobutyl group, an n-pentyl group, an n-hexyl group, an n-heptyl group, an n-octyl group, an n-nonyl group, an n-decyl group, an n-undecyl group, an n-dodecyl group, an n-tridecyl group, a phenyl group, and a benzyl group. When R is a substituted hydrocarbon group, R is preferably one in which a hydrogen atom of the hydrocarbon group exemplified when R is a hydrocarbon group is substituted by a substituent. The substituent may be a halogen atom such as a fluorine atom.

It is preferable that the structural unit (B1) contain a structural unit (D) represented by the following formula (D).

[Chem. 17]

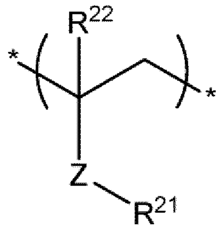

(D)

(Z is a covalent bond, -O-, -S-, -C(=O)-, -C(=O) O-, or -OC(=O)-, $R^{21}$ is a monovalent organic group, $R^{22}$ is a hydrogen atom or a monovalent hydrocarbon group, and * represents a position where the structural unit (D) is bound to another structural unit.)

When $R^{22}$ is a monovalent hydrocarbon group, the number of carbon atoms possessed by the hydrocarbon group is preferably 1 to 10, 1 to 5, and 1 to 3. $R^{22}$ may be a hydrogen atom or a methyl group.

Z is preferably a covalent bond, -O-, -C(=O) O-, or -OC(=O)-, more preferably a covalent bond or -O-, and still more preferably -O-.

$R^{21}$ is preferably those exemplified as R in the above -Z-R group.

The structural unit (B1) may contain structural units other than the structural unit (D). Examples of such structural units include a structural unit (E) represented by the following formula (E).

[Chem. 18]

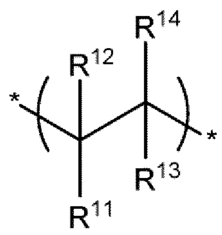

(E)

(In formula (E), $R^{11}$ to $R^{14}$ are each independently a hydrogen atom, a hydrocarbon group having 1 to 20 carbon atoms, -C(=O)OH, and a monovalent group of -CN or -C(=O)NR$^{31}$ ($R^{31}$ is a hydrogen atom or an organic group), and * represents a position where the structural unit (E) is bound to another structural unit.)

When $R^{31}$ is an organic group, $R^{31}$ is preferably a substituted or unsubstituted hydrocarbon group. The number of carbon atoms possessed by a substituted or unsubstituted hydrocarbon group is preferably 1 to 18, more preferably 1 to 15, still more preferably 1 to 10, and particularly preferably 1 to 5.

In addition, the polymer may include a structural unit (B2) represented by the following formula (B2).

[Chem. 19]

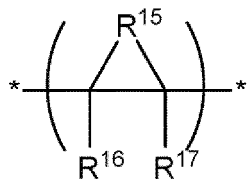

(B2)

(In formula (B2), $R^{15}$ is a divalent organic group having 1 to 20 carbon atoms, and $R^{16}$ and $R^{17}$ are each a hydrogen atom, a halogen atom, or a monovalent organic group having 1 to 20 carbon atoms.)

The number of carbon atoms possessed by $R^{15}$ is preferably 2 to 10, more preferably 2 to 6, and still more preferably 3 to 5. $R^{15}$ may contain at least one divalent group selected from the group consisting of -O-, -S-, -C(=O), -C(=O)O-, -C(=O)-O-C(=O)-, and -C(=O)-N($R^{35}$)-C(=O)- in its group. Here, $R^{35}$ is a monovalent organic group. When $R^{15}$ contains a plurality of such divalent groups, the plurality of divalent groups are not adjacent to each other. In addition to the above divalent groups, $R^{15}$ may have a hydrocarbon moiety or a substituted hydrocarbon moiety in which a hydrogen atom of the hydrocarbon moiety is substituted by a substituent. Examples of substituents include halogen atoms. The above hydrocarbon group is not particularly limited and may be an aliphatic hydrocarbon group or an aromatic hydrocarbon group. The aliphatic hydrocarbon group may be any of a linear hydrocarbon group, a branched hydrocarbon group, and a cyclic hydrocarbon group. In addition, the hydrocarbon group may be either a saturated hydrocarbon group or an unsaturated hydrocarbon group.

The number of carbon atoms possessed by $R^{15}$ may be 1 to 15, 2 to 10, 2 to 8, or 3 to 6. The hydrocarbon group as $R^{15}$ is preferably an alkylene group having 1 to 8 carbon atoms, a polyalkyleneoxy group, or a group in which some or all of hydrogen atoms bound to the carbon atoms possessed by these groups are substituted with halogen atoms such as fluorine atoms.

When $R^{16}$ and $R^{17}$ are organic groups, specific examples of the organic groups include those exemplified as specific examples of $R^1$ to $R^4$.

The structural unit (B2) is a group different from the structural unit (A). In other words, the structural unit in the above structural unit (A) is not in the structural unit (B2). When $R^{15}$ is a -C(=O)-N($R^{35}$)-C(=O)- group, $R^{35}$ may be -X-$SO_2$-$N^-M^+$-$SO_2$-Y (X, M, and Y have the same meaning as X, M, and Y in formula (A)). In such a case, at least one of $R^{16}$ and $R^{17}$ is a monovalent substituent other than a hydrogen atom, and examples of the substituent include a halogen atom and a monovalent organic group having 1 to 20 carbon atoms. The number of carbon atoms possessed by the monovalent organic group is preferably 1 to 10 and more preferably 1 to 5.

The structural unit (B2) is a group different from a structural unit (C) to be described below. The structural unit (B2) does not include a structural unit in which $R^{15}$ is -C(=O)-O-C(=O)- and both $R^{16}$ and $R^{17}$ are hydrogen atoms. In

other words, when $R^{15}$ is -C(=O)-O-C(=O)-, at least one of $R^{16}$ and $R^{17}$ is a monovalent substituent other than a hydrogen atom, and examples of the substituent include a halogen atom and a monovalent organic group having 1 to 20 carbon atoms. The number of carbon atoms possessed by the monovalent organic group is preferably 1 to 10 and more preferably 1 to 5.

$R^{15}$ may be a 3-21C group containing at least one of -C(=O)-O-C(=O)- and -C(=O)-N($R^{35}$)-C(=O)- or may be a 3-19C group containing at least one of -C(=O)-O-C(=O)- and -C(=O)-N($R^{35}$)-C(=O)-. Examples of such groups include a structural unit derived from a maleic anhydride derivative and a structural unit derived from a maleimide derivative. The structural unit (B2) may include at least one of the structural unit derived from a maleic anhydride derivative and the structural unit derived from a maleimide derivative. The structural unit derived from a maleic anhydride derivative and the structural unit derived from a maleimide derivative are each a structural unit with a chemical structure directly obtained through radical polymerization of the maleic anhydride derivative and the maleimide derivative. The molar ratio of the structural unit derived from a maleic anhydride derivative to the first structural unit may be 5/95 or less.

$R^{35}$ is a monovalent organic group. The number of carbon atoms possessed by the monovalent organic group may be 1 to 15, 2 to 10, 2 to 8, or 3 to 6.

When $R^{15}$ is an organic group, $R^{15}$ may be a substituted or unsubstituted hydrocarbon group. The number of carbon atoms possessed by a substituted or unsubstituted hydrocarbon group is preferably 1 to 18, more preferably 1 to 15, and still more preferably 1 to 10.

The polymer may include a structural unit derived from a hydrocarbon compound having a plurality of ethylenically unsaturated groups such as butadiene and isoprene.

The polymer may have a structural unit derived from a cross-linking agent. Examples of cross-linking agents include compounds, such as hexanediol diacrylate, pentaerythritol tetraacrylate, divinylbenzene, and triethylene glycol divinyl ether, having a plurality of ethylenically unsaturated groups in the molecules.

The above polymer may include two or more structural units (A) or only one structural unit (A). In addition, the above polymer may include two or more second structural units or only one second structural unit. When a plurality of second structural units are included, either or both of a plurality of the structural units (B1) and the structural units (B2) may be included, or one each of the structural unit (B1) and the structural unit (B2) may be included.

The number average molecular weight (Mn) of the polymer may be 5,000 to 200,000, 8,000 to 120,000, or 10,000 to 100,000. The weight average molecular weight (Mw) of the polymer may be 5,000 to 300,000, 10,000 to 250,000, or 20,000 to 100,000. The molecular weight distribution (Mw/Mn) of the polymer may be 1.0 to 3.0 or 1.3 to 2.7. The number average molecular weight and weight average molecular weight of the polymer can be measured, for example, through gel permeation chromatography.

The above polymer may or may not contain the structural unit (C) represented by the following formula (C).

[Chem. 20]

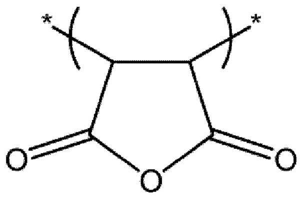

(C)

Regarding the content of the structural unit (C) in the polymer, the molar ratio of the structural unit (C) to the structural unit (A) is preferably 5/95 or less, more preferably 3/97 or less, and still more preferably 1/99 or less. When the content of the structural unit (C) in the polymer is within such ranges, the voltage resistance of the polymer on the oxidation side tends to be higher. The polymer may be substantially free of the structural unit (C). In addition, the polymer may contain a structural unit resulting from a reaction between the structural unit (A) with one or two molecules of water or a structural unit resulting from hydrolysis of (C).

<Method for producing polymer>

A method for producing a polymer according to one embodiment of the present disclosure preferably includes: a step of polymerizing monomers (monomer mixture) including a monomer (A') (also referred to as a first monomer) represented by the following formula (A') and a second monomer including at least one of a monomer (B1') represented

by the following formula (B1') and a monomer (B2') represented by the following formula (B2'). Such a method for producing a polymer is a method suitable for producing the polymer of the above present embodiment. The second monomer may be used in excess of a desired proportion in the polymer.

[Chem. 21]

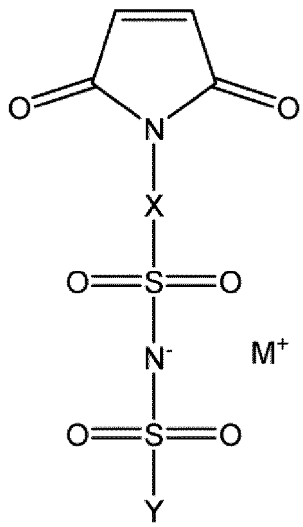

(A')

(In formula (A'), X is a divalent organic group having 1 to 20 carbon atoms, Y is a halogen atom or a monovalent organic group having 1 to 20 carbon atoms, and M is an alkali metal element selected from Li, Na and K.)

[Chem. 22]

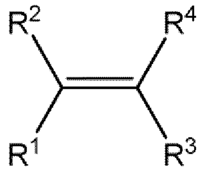

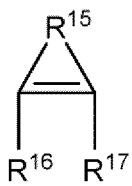

(B1') (B2')

(In formula (B 1'), $R^1$ to $R^4$ are each independently a hydrogen atom, a halogen atom, or a monovalent organic group having 1 to 20 carbon atoms; and in formula (B2'), $R^{15}$ is a divalent organic group having 1 to 20 carbon atoms and $R^{16}$ and $R^{17}$ are each a hydrogen atom, a halogen atom, or a monovalent organic group having 1 to 20 carbon atoms.)

Preferred examples of X, Y and M in the monomer (A') respectively include those exemplified as X, Y and M in the structural unit (A) of the above polymer.

Preferred examples of $R^1$ to $R^4$ in the monomer (B1') respectively include those exemplified as $R^1$ to $R^4$ in the structural unit (B 1) of the above polymer. In other words, examples of the monomer (B1) includes a monomer (D') represented by the following formula (D') and a monomer (E') represented by the following formula (E').

[Chem. 23]

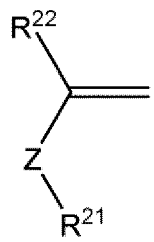

(D')

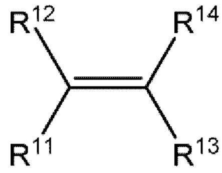

(E')

In formula (D'), preferred examples of $R^{22}$, Z, and $R^{21}$ include those exemplified as $R^{22}$, Z, and $R^{21}$ in the structural unit (D). In formula (E'), preferred examples of $R^{11}$ to $R^{14}$ include those exemplified as $R^{11}$ to $R^{14}$ in the structural unit (E).

In formula (E'), preferred examples of $R^{15}$ to $R^{17}$ include those exemplified as $R^{15}$ to $R^{17}$ in the structural unit (B2). The monomer (B2') does not include either maleic anhydride and a monomer in the above monomer (A').

The monomer (B1') may be an alkyl (meth)acrylic acid ester, an olefin compound, styrene or a styrene derivative, or a vinyl ester compound or a vinyl ether compound, and is preferably an olefin compound or a vinyl ether compound. Examples of vinyl ether compounds include those given by $H_2C=CH(OR^{41})$ in which $R^{41}$ may be a substituted or unsubstituted hydrocarbon group or a group of the above formula: $-(R^{24}O)_k-R^{25}$. Examples of $R^{41}$ include those exemplified as R above.

Vinyl ether compounds may be alkyl vinyl ethers. Examples of vinyl ether compounds include alkyl vinyl ethers, such as methyl vinyl ether, ethyl vinyl ether, n-propyl vinyl ether, isopropyl vinyl ether, n-butyl vinyl ether, isobutyl vinyl ether, t-butyl vinyl ether, n-pentyl vinyl ether, n-hexyl vinyl ether, n-heptyl vinyl ether, n-octyl vinyl ether, 2-ethylhexyl vinyl ether, n-nonyl vinyl ether, n-decyl vinyl ether, n-undecyl vinyl ether, n-dodecyl vinyl ether, and n-tridecyl vinyl ether, having a linear or branched alkyl group; and vinyl ether compounds, such as cyclohexyl vinyl ether and benzyl vinyl ether, having a carbon ring (which may be either aliphatic or aromatic), and isobutyl vinyl ether or n-dodecyl vinyl ether is preferable.

In addition, vinyl ether compounds may be compounds, such as tetraethylene glycol methyl vinyl ether, 3,6,9,12,15-pentaoxa-1-heptadecene, and 2-(heptafluoropropoxy)hexafluoropropyl trifluorovinyl ether, having two or more ether bonds in the molecules.

Examples of styrene derivatives include alkyl-substituted styrene. Alkyl groups as substituents may be methyl or ethyl groups. Examples of alkyl substituted styrene include $\alpha$-methylstyrene, $\beta$-methylstyrene (which may be either a cis-type or a trans-type, or a mixture thereof), 2-methylstyrene, 3-methylstyrene, and 4-methylstyrene. In addition, examples of styrene derivatives include alkoxystyrene such as 4-methoxystyrene or 4-ethoxystyrene; and halogen-substituted styrene such as 2,3,4,5,6-pentafluorostyrene.

A polymerizable composition contains the monomer (A'), the second monomer, and a radical polymerization initiator. In other words, a polymerization reaction of the monomer takes place in the polymerizable composition and is initiated in the presence of an initiator. If the number of moles of the monomer (A') to the number of moles of all the monomers in the polymer composition is m, m is preferably 0.3 to 0.7 and more preferably 0.4 to 0.6. If the number of moles of the monomer (B1') to the number of moles of all the monomers in the polymer composition is n, n is preferably 0.3 to 0.7 and more preferably 0.4 to 0.6.

A value of m/(m+n) in the polymerizable composition is preferably more than 0.40, more preferably 0.41 or more, still more preferably 0.45 or more, and particularly preferably 0.45 to 0.60. There is no problem as long as the sum of m and n in the polymerizable composition is 1 or less. For example, it may be 0.5 to 0.95 or 0.6 to 0.90. When the monomer (A') and the second monomer have a relationship between an electron acceptor and an electron donor, the polymer tends to have a primary structure in which the structural unit (A) and the second structural unit are arranged alternately.

The radical polymerization initiator may be either a thermal initiator or a photoinitiator. Examples of thermal initiators include 2,2-azobis(isobutyronitrile) (AIBN); azo-based initiators such as 2,2-azobis(2-methylbutyronitrile) (AMBN), 2,2-azobis(2,4-dimethylvaleronitrile) (ADVN), 1,1-azobis(1-cyclohexanecarbonitrile) (ACHN, V-40), and dimethyl-2,2-azobisisobutyrate (MAIB); and organic peroxides such as dibenzoyl peroxide, di-8,5,5-trimethylhexanoyl peroxide, dilauroyl peroxide, didecanoyl peroxide, di(2,4-dichlorobenzoyl) peroxide. Examples of photoinitiators include oxime-based compounds, metallocene-based compounds, acylphosphine-based compounds, and aminoacetophenone-based compounds. One or more initiators may be used.

The polymerizable composition may contain a chain transfer agent such as carbon tetrachloride.

If necessary, the polymerizable composition may contain a cross-linking agent. In addition, the polymerizable composition may contain a solvent. In addition, the polymerizable composition may not contain maleic anhydride, and the molar ratio of maleic anhydride to the monomer (A) is preferably 5/95 or less, more preferably 3/97 or less, and still more preferably 1/99 or less.

(Second embodiment)

A polymer according to a second embodiment of the present disclosure includes: a structural unit (A) represented by the following formula (A), in which the molar ratio of a structural unit (C) represented by the following formula (C) to the structural unit (A) in the above polymer is 5/95 or less. Such a polymer has excellent voltage resistance on the oxidation side.

[Chem. 24]

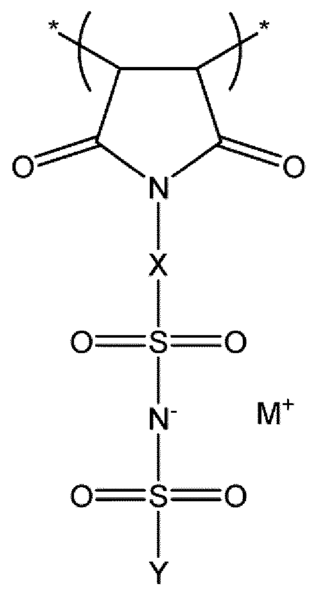

(A)

(In formula (A), X is a divalent organic group having 1 to 20 carbon atoms, Y is a halogen atom or a monovalent organic group having 1 to 20 carbon atoms, M is an alkali metal element selected from Li, Na, and K, and * represents a position where the structural unit (A) is bound to another structural unit.)

[Chem. 25]

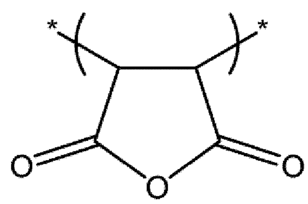

(C)

The polymer according to the second embodiment may be a copolymer containing a structural unit (A) and a structural unit other than the structural unit (A) as structural units. The copolymer may contain the structural unit (A) as a main component. The polymer may not contain the structural unit (C), and the molar ratio of the structural unit (C) to

structural unit (A) is 5/95 or less, more preferably 3/97 or less, and still more preferably 1/99. When the content of the structural unit (C) in the polymer is within such ranges, the oxidation stability of the polymer tends to increase.

The ratio m of the structural unit (A) to all structural units in the polymer may be 0.2 to 0.95 or 0.2 to 0.8. m is preferably 0.3 to 0.7 and more preferably 0.4 to 0.6. n is preferably 0.3 to 0.7 and more preferably 0.4 to 0.6.

Preferred examples of the structural unit (A) may be those exemplified as the structural unit (A) in the polymer of the first embodiment.

The polymer of the present embodiment may contain a structural unit other than the structural unit (A). Such a structural unit is preferably a structural unit obtained through radical polymerization of a monomer having an ethylenically unsaturated group, and may be the second structural unit in the polymer of the first embodiment, and may be at least one of the structural unit (B 1) and the structural unit (B2). The type of structural unit (B1) and structural unit (B2) and the range of the content of the structural unit (B 1) and the structural unit (B2) can be the same as those in the first embodiment. In addition, the polymer according to the present embodiment may contain a structural unit derived from a cross-linking agent, and may contain a structural unit resulting from a reaction between the structural unit (A) with one or two molecules of water or a structural unit resulting from hydrolysis of the structural unit (C). The molar ratio of a structural unit derived from a maleic anhydride derivative to a first structural unit may be 5/95 or less. The structural unit derived from maleic anhydride is a structural unit with a chemical structure directly obtained through radical polymerization of a maleic anhydride derivative.

A method for producing the polymer of the present embodiment preferably includes a step of polymerizing monomers (monomer mixture) including a monomer (A') represented by formula (A'). Such a method for producing a polymer is a method suitable for producing the polymer of the above present embodiment. Polymerization of a monomer may take place in a polymerizable composition containing an initiator.

The polymers of the first and second embodiments may be contained in batteries as ion-conducting materials because they tend to have high ion conductivity (alkali metal ion conductivity). The polymer of the present embodiment can be used, for example, as an electrolyte in batteries such as lithium ion batteries, sodium ion batteries, and potassium ion batteries, and an electrolyte in capacitors. The oxidation potentials of the polymers of the first and second embodiments are preferably 4.5 V or higher, still more preferably 4.6 V or higher, and particularly preferably 4.8 V or higher with respect to a $Li/Li^+$ electrode.

The polymers of the first and second embodiments may be mixed with a plasticizer to make an electrolyte composition for use in electrolytes and the like for batteries. That is, the electrolyte composition of the present embodiment may contain the polymers of the first and second embodiments and may further contain a plasticizer. The plasticizer may be an organic solvent or may be an aprotic solvent. The organic solvent may be at least one selected from the group consisting of carbonate-based solvents, fluorine-based solvents, and ether-based solvents, which may be aprotic solvents. The use of a plasticizer tends to facilitate molding of an electrolyte composition.

Examples of carbonate-based solvents include chain carbonates such as dimethyl carbonate, diethyl carbonate, and ethyl methyl carbonate; and cyclic carbonates such as ethylene carbonate, propylene carbonate, butylene carbonate, and vinylene carbonate. Examples of ether-based solvents include cyclic ethers such as tetrahydrofuran, 2-methyltetrahydrofuran, tetrahydropyran, and 1,3-dioxolane; and chain ethers such as 1,2-diethoxyethane and ethoxymethoxyethane. Examples of fluorine-based solvents include hydrofluorocarbons such as perfluorooctane; hydrofluoroethers such as methyl nonafluorobutyl ether and ethyl nonafluorobutyl ether; and hydrofluoroolefins such as 1,3,3,3-tetrafluoropropene. In addition, examples of solvents include aprotic solvents such as dimethyl sulfoxide (DMSO); and amide-based solvents such as dimethylformamide (DMF) and dimethylacetamide (DMA).

The content of a plasticizer in the electrolyte composition may be 20 to 500 parts by mass, 50 to 300 parts by mass, or 100 to 250 parts by mass based on 100 parts by mass of the above polymer.

The electrolyte composition may further contain other resins. Examples of other resins include fluorine-based resins. Resins with carbon chains as main chains are preferable as fluorine-based resins. The carbon chains may be formed through radical polymerization of ethylenically unsaturated groups. Examples of fluororesins include poly(vinylidene fluoride-co-hexafluoropropylene) (PVDF-HFP) and polyvinylidene fluoride (PVDF).

The electrolyte composition may contain alkali metal salts such as lithium salts in addition to the above polymer. Lithium salts are not particularly limited, and examples thereof include LiCl, LiBr, LiI, $LiClO_4$, $LiPF_6$, $LiBF_4$, $Li_2SO_4$, and $Li[(C_hF_{2h+1})SO_2]_2N$ (h being 0 to 3). Examples of alkali metal salts other than lithium salts include those in which lithium in the above specific examples of lithium salts is substituted with other alkali metal elements such as sodium and potassium.

[Examples]

<Production of polymer>

The following monomers A1, B1, B2, B3 and B4 were prepared.

(Synthesis of monomer A1)

In a nitrogen atmosphere, trifluoromethanesulfonamide (52.5 mmol, 7.83 g, manufactured by Tokyo Chemical Industry Co., Ltd.) was dissolved in dehydrated acetonitrile (150 mL, manufactured by Kanto Chemical Co., Inc.). To this solution, lithium hydroxide (105 mmol, 2.51 g, manufactured by Tokyo Chemical Industry Co., Ltd.) and 4-acetamidobenzenesulfonyl chloride (50 mmol, 11.68 g, Tokyo Chemical Industry Co., Ltd.) were added in this order and heated and refluxed for 5 hours. After cooling to room temperature, an excess amount of acetonitrile (700 mL) was added thereto to precipitate a solid, which was separated through filtration and then washed with dichloromethane (manufactured by Kanto chemical Co., Inc.) to obtain an intermediate 1. The yield was 97.1%.

• Structural formula of intermediate 1:

[Chem. 26]

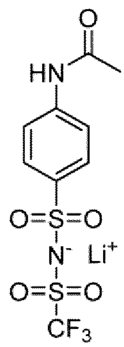

In a nitrogen atmosphere, 5% hydrochloric acid (22.5 mL) was added to the intermediate 1 (15 mmol, 5.28 g) and stirred at 90°C for 2 hours. After cooling to room temperature, a lithium hydroxide solution was added thereto until the pH was 7 or more under confirmation using pH test paper or the like, and then dried under reduced pressure to obtain a solid. The resulting solid was extracted with an acetonitrile solution and dried under reduced pressure to obtain an intermediate 2. The yield was 92.6% based on the raw material for the above intermediate 1.

• Structural formula of intermediate 2:

[Chem. 27]

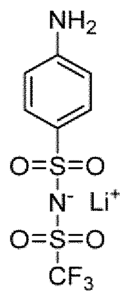

In a nitrogen atmosphere, maleic anhydride (13.3 mmol, 1.30 g, manufactured by Tokyo Chemical Industry Co., Ltd.) was dissolved in dehydrated 1,4-dioxane (manufactured by Kanto Chemical Co., Inc.). To this solution, a total amount of dehydrated tetrahydrofuran (26.4 mL, Kanto Chemical Co., Inc.) solution of the intermediate 2 (13.2 mmol, 4.09 g) adjusted in a nitrogen atmosphere was added dropwise and stirred at room temperature for 12 hours. After the reaction, a precipitate was filtered and vacuum-dried at 60°C for 4 hours to obtain a solid containing an intermediate 3.

• Structural formula of intermediate 3:

[Chem. 28]

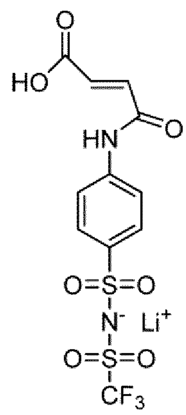

In a nitrogen atmosphere, the solid containing the intermediate 3 (14.0 mmol, 5.70 g) and a sodium acetate solution (13.3 mmol, 1.09 g, manufactured by Tokyo Chemical Industry Co., Ltd.) were added to acetic anhydride (12.3 mL, manufactured by Tokyo Chemical Industry Co., Ltd.) and stirred at 70°C for 3 hours. The total amount of solution after the reaction was added dropwise to an excess amount of diethyl ether (manufactured by Kanto Chemical Co., Inc.) at 0°C, and a precipitate was collected through filtration. The precipitate was extracted with dehydrated acetonitrile (manufactured by Kanto Chemical Co., Inc.) in an inert atmosphere and dried under reduced pressure to obtain A1. The yield throughout the entire process was 72.8%.

• Monomer A1: Following compound (A1)

[Chem. 29]

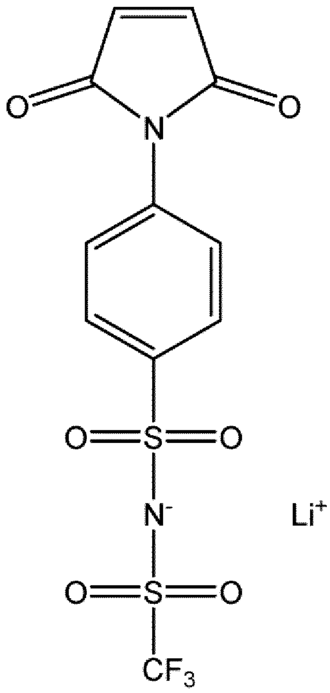

(A1)

B1: A commercially available reagent with purity >99% manufactured by Tokyo Chemical Industry Co., Ltd. was used after the purity was improved by washing with 10% NaOH aq. and pure water, sealing with KOH, drying overnight, adding $CaH_2$, and distilling under normal pressure.

B2: A commercially available reagent with purity >98% manufactured by Sigma-Aldrich Co. LLC. was used after the purity was improved by sealing with $CaCl_2$, drying overnight, adding $CaH_2$, and distilling under reduced pressure.

B3: A commercially available reagent with purity > 98% manufactured by Sigma-Aldrich Co. LLC. was used as is.

B4: A commercially available reagent with purity >98% manufactured by Sigma-Aldrich Co. LLC. was used after the purity was improved by sealing with $CaCl_2$, drying overnight, adding $CaH_2$, and distilling under reduced pressure.

Monomer B1: Isobutyl vinyl ether
Monomer B2: n-dodecyl vinyl ether
Monomer B3: Tetraethylene glycol methyl vinyl ether
Monomer B4: Styrene

(Example A1)

0.741 g of a monomer A1, 0.340 g of a monomer B1, and 8.2 mg of azobisisobutyronitrile (AIBN) were dissolved in 10 mL of dehydrated acetonitrile and reacted at 60°C for 24 hours in a nitrogen atmosphere while adding tetralin as an internal standard substance and checking the monomer consumption rate. The polymerization solution was dialyzed in acetonitrile and vacuum-dried at 120°C to obtain 0.34 g (yield of 82%) of a copolymer 1. The monomer introduction ratio was A1:B1=62:38. The monomer introduction ratio was calculated from $^1$H-NMR of the copolymer 1.

The copolymer 1 had a number average molecular weight Mn of $1.7\times10^4$, a weight average molecular weight Mw of $2.9\times10^4$, and a molecular weight distribution Mw/Mn of 1.70.

(Example A2)

0.936 g of a monomer A1, 1.53 g of a monomer B2, and 16.4 mg of AIBN were dissolved in 20 mL of dehydrated

acetonitrile and reacted at 60°C for 24 hours in a nitrogen atmosphere while adding tetralin as an internal standard substance and checking the monomer consumption rate. The polymerization solution was dialyzed in acetonitrile and vacuum-dried at 120°C to obtain 0.637 g (yield of 44%) of a copolymer 2. The monomer introduction ratio was A1:B2=55:45. The monomer introduction ratio was calculated from $^1$H-NMR of the copolymer 2.

The copolymer 2 had a number average molecular weight Mn of $4.9\times10^4$, a weight average molecular weight Mw of $7.9\times10^4$, and a molecular weight distribution Mw/Mn of 1.63.

(Example A3)

1.17 g of a monomer A1, 2.25 g of a monomer B3, and 24.6 mg of AIBN were dissolved in 30 mL of dehydrated acetonitrile and reacted at 60°C for 24 hours in a nitrogen atmosphere while adding tetralin as an internal standard substance and checking the monomer consumption rate. The polymerization solution was dialyzed in acetonitrile and vacuum-dried at 120°C to obtain 1.49 g (yield of 79%) of a copolymer 3. The monomer introduction ratio was A1:B3=41:59. The monomer introduction ratio was calculated from $^1$H-NMR of the copolymer 3.

The copolymer 3 had a number average molecular weight Mn of $1.4\times10^4$, a weight average molecular weight Mw of $2.7\times10^4$, and a molecular weight distribution Mw/Mn of 1.85.

(Example A4)

0.558 g of a monomer A1, 0.149 g of a monomer B4, and 11.7 mg of AIBN were dissolved in 13.4 mL of dehydrated acetonitrile and reacted at 60°C for 24 hours in a nitrogen atmosphere while adding tetralin as an internal standard substance and checking the monomer consumption rate. The polymerization solution was dialyzed in acetonitrile and vacuum-dried at 120°C to obtain 0.640 g (yield of 87%) of a copolymer 4. The monomer introduction ratio was A1:B4=52:48. The monomer introduction ratio was calculated from $^1$H-NMR of the copolymer 4.

The copolymer 4 had a number average molecular weight Mn of $8.7\times10^4$, a weight average molecular weight Mw of $2.2\times10^5$, and a molecular weight distribution Mw/Mn of 2.55.

(Comparative Example A1)

Poly(ethylene-alt-maleic anhydride) (weight average molecular weight=100,000 to 500,000, product number: 188050) manufactured by Sigma-Aldrich Co. LLC. was used as a copolymer 5.

<Measurement of oxidation potential of copolymer>

An oxidation potential was measured for each of the copolymers in Examples A1 to A4 and Comparative Example A1 as follows.

A polymer solution was prepared by dissolving each copolymer in a 1 M $LiClO_4$ propylene carbonate solution in a nitrogen-substituted glove box. The concentration of the copolymer in the polymer solution was 10 mM in terms of lithium ions.

At room temperature (25°C), the polymer solution was injected into a tripolar cell (manufactured by EC Frontier Co., Ltd.) in the above glove box, and linear sweep voltammetry (sweep speed: 5 mV/s, sweep range: +5.5 V from open circuit potential to $Li/Li^+$ reference, working electrode: platinum wire, counter electrode: lithium, reference electrode: lithium) was performed in an argon atmosphere using a measurement device (HZ7000 electrochemical measurement system, manufactured by Hokuto Denko Corporation), and a potential at which a current density of 20 $\mu A/cm^2$ was measured was regarded as an oxidation potential. The results are shown in Table 1.

[Table 1]

| Example | Copolymer | Oxidation potential (V vs. $Li/Li^+$) |
|---|---|---|
| Example A1 | Copolymer 1 | 5.1 |
| Example A2 | Copolymer 2 | 5.2 |
| Example A3 | Copolymer 3 | 4.9 |
| Example A4 | Copolymer 4 | 4.9 |
| Comparative Example A1 | Copolymer 5 | 4.4 |

(Example B1)

200 parts by mass of a plasticizer was added to 100 parts by mass of a copolymer 1 to obtain an electrolyte composition. A mixed solvent of ethylene carbonate and propylene carbonate (in 1:1 volume ratio) was used as the plasticizer. The following various measurements were performed on the resulting electrolyte composition. The results are shown in Table 2.

Ion conductivity:

An evaluation cell of a coin-type battery CR2032 was assembled in a dry argon atmosphere in a glove box. Specifically, a test laminate (stainless steel plate/electrolyte composition/stainless steel plate) was prepared by laminating each layer in the following order in the evaluation cell.

An impedance measurement device was used for measurement under the conditions at 25°C, in a frequency range of 0.1 Hz to 1 MHz, and at an applied voltage of 10 mV (vs. open circuit voltage). The ionic conductivity $\sigma$ can be calculated by the following equation.

$$\sigma(S \cdot cm^{-1}) = t(cm)/(R(\Omega) \times A(cm^2))$$

In the equation, R represents an impedance value. A represents an area of the sample. t represents a thickness of the sample.

Activation energy:

Ion conductivity measurements using the above evaluation cell were also performed under the conditions at 30°C, 40°C, 50°C, 60°C, and 70°C to measure the change in ion conductivity with respect to the temperatures. The activation energy was calculated using the Arrhenius equation (logk=logA-Ea/RT, k: reaction rate constant, A: frequency factor, Ea: activation energy, R: gas constant, T: absolute temperature) from the slope of the graph of common logarithm values of the ion conductivity and reciprocals of the temperatures.

Lithium ion transference number:

An evaluation cell of a coin-type lithium battery CR2032 was assembled in a dry argon atmosphere in a glove box. Specifically, a test laminate (lithium/electrolyte composition/lithium) was prepared by laminating each layer in the following order in the evaluation cell.

One introduced in Polymer, 28, 2324 (1987) is used as a lithium ion transference number measurement method. In other words, at room temperature (25°C), 10 mV was applied to a test laminate, an initial current value ($I_0$) and a steady-state current value (Iss) were measured, and an interface resistance measurement value $R_0$ before voltage application and an interface resistance measurement value $R_{SS}$ after voltage application were obtained through a complex impedance method. The obtained values were then introduced into the following equation to obtain a lithium ion transference number ($t_{Li+}$). V in the equation is an applied voltage.

$$t_{Li+} = I_{SS}(V - I_0R_0)/I_0(V - I_{SS}R_{SS})$$

(Example B2)

An electrolyte composition was obtained in the same manner as in Example B1 except that a copolymer 2 was used instead of the copolymer 1. Various measurements were performed on the resulting electrolyte composition in the same manner as in Example B1. The results are shown in Table 2.

(Example B3)

An electrolyte composition was obtained in the same manner as in Example B1 except that a copolymer 3 was used instead of the copolymer 1. Various measurements were performed on the resulting electrolyte composition in the same manner as in Example B1. The results are shown in Table 2.

(Example B4)

An electrolyte composition was obtained in the same manner as in Example B1 except that a copolymer 4 was used instead of the copolymer 1. Various measurements were performed on the resulting electrolyte composition in the same manner as in Example B1. The results are shown in Table 2.

(Example B5)

100 parts by mass of a copolymer 1 and 100 parts by mass of poly(vinylidene fluoride-co-hexafluoropropylene) were mixed with each other to produce a composite resin. The same plasticizer as in Example B1 was added to the composite resin at a ratio of 200 parts by mass to 100 parts by mass of the polymer 1 to obtain an electrolyte composition. Various measurements were performed on the resulting electrolyte composition in the same manner as in Example B1. The results are shown in Table 2.

[Table 2]

| | Ion conductivity (S/cm) | Activation energy (kJ/mol) | $Li^+$ transference number |
|---|---|---|---|
| Example B1 | $1.4\times10^{-4}$ | 22.6 | 0.70 |
| Example B2 | $4.3\times10^{-4}$ | 21.0 | 0.75 |
| Example B3 | $5.5\times10^{-5}$ | 32.0 | 0.70 |
| Example B4 | $5.3\times10^{-4}$ | 18.9 | 0.80 |
| Example B5 | $1.2\times10^{-4}$ | 16.0 | 0.72 |

**Claims**

**1.** A polymer comprising:

a first structural unit which is at least one structural unit (A) represented by the following formula (A); and
a second structural unit which is at least one of a structural unit (B 1) represented by the following formula (B 1) and a structural unit (B2) represented by the following formula (B2),
wherein the polymer satisfies at least one of the following conditions (1) and (2),

(1) a ratio m of the first structural unit to total structural units in the polymer is 0.2 to 0.8, and a ratio n of the second structural unit to the total structural units in the polymer is 0.2 to 0.8,
(2) a content of the first structural unit is 25 to 95 mass% and a content of the second structural unit is 5 to 75 mass% based on the total mass of the polymer,

[Chem. 1]

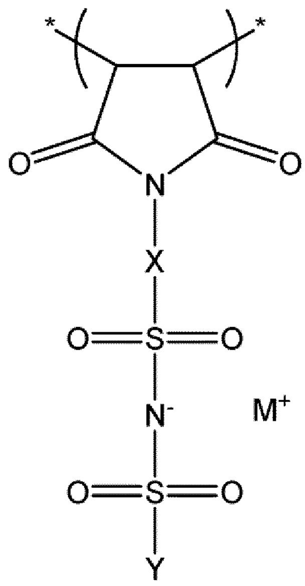

(A)

(in formula (A), X is a divalent organic group having 1 to 20 carbon atoms, Y is a halogen atom or a monovalent organic group having 1 to 20 carbon atoms, M is an alkali metal element selected from Li, Na, and K, and * represents a position where the structural unit (A) is bound to another structural unit),

[Chem. 2]

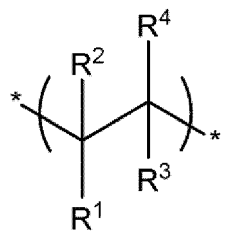

(B1)

(in formula (B1), $R^1$ to $R^4$ are each independently a hydrogen atom, a halogen atom, or a monovalent organic group having 1 to 20 carbon atoms, and * represents a position where the structural unit (B1) is bound to another structural unit), and

[Chem. 3]

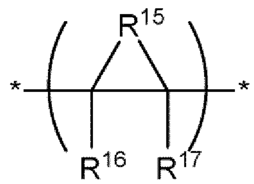

(B2)

(in formula (B2), $R^{15}$ is a divalent organic group having 1 to 20 carbon atoms, and $R^{16}$ and $R^{17}$ are each a

hydrogen atom, a halogen atom, or a monovalent organic group having 1 to 20 carbon atoms, with the proviso that a structural unit in which $R^{15}$ is -C(=O)-O-C(=O)- and both $R^{16}$ and $R^{17}$ are hydrogen atoms, and a structural unit in the structural unit (A) are not in the structural unit (B2)).

**2.** The polymer according to claim 1, wherein the molar ratio of a structural unit (C) represented by the following formula (C) to the first structural unit in the polymer is 5/95 or less.

[Chem. 4]

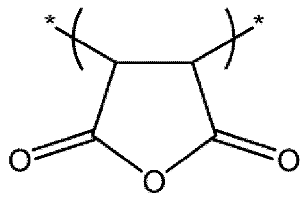

(C)

**3.** The polymer according to claim 1 or 2, wherein an oxidation potential is 4.5 V or higher with respect to a $Li/Li^+$ electrode.

**4.** The polymer according to any one of claims 1 to 3,

wherein the second structural unit contains a structural unit (D) represented by the following formula (D),

[Chem. 5]

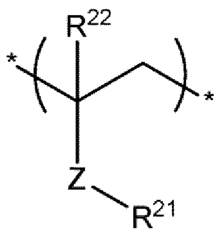

(D)

(Z is a covalent bond, -O-, -S-, -C(=O)-, or -C(=O)O-), $R^{22}$ is a hydrogen atom or a monovalent hydrocarbon group, $R^{21}$ is a monovalent organic group, and * represents a position where the structural unit (D) is bound to another structural unit).

**5.** The polymer according to any one of claims 1 to 4, wherein the molar ratio of the structural unit (A) to the total number of moles of the structural unit (A) and the structural unit (B 1) is more than 0.40.

**6.** A polymer comprising:

a structural unit (A) represented by the following formula (A),
wherein the molar ratio of a structural unit (C) represented by the following formula (C) to the structural unit (A) in the polymer is 5/95 or less,

[Chem. 6]

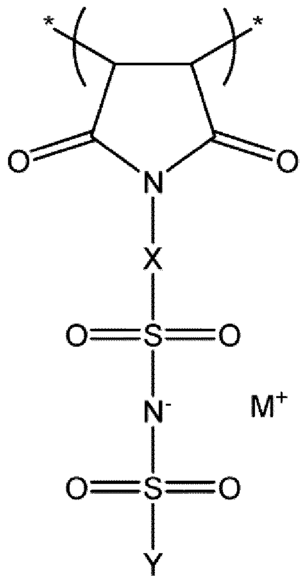

(A)

(in formula (A), X is a divalent organic group having 1 to 20 carbon atoms, Y is a halogen atom or a monovalent organic group having 1 to 20 carbon atoms, M is an alkali metal element selected from Li, Na, and K, and * represents a position where the structural unit (A) is bound to another structural unit).

[Chem. 7]

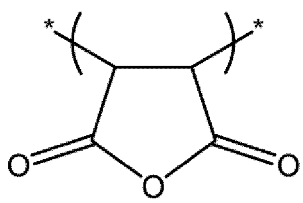

(C)

**7.** An electrolyte composition comprising:
the polymer according to any one of claims 1 to 6.

**8.** The electrolyte composition according to claim 7, further comprising:
a plasticizer.

**9.** The electrolyte composition according to claim 8,
wherein the plasticizer is an organic solvent.

**10.** A battery comprising:
the polymer according to any one of claims 1 to 6 or the electrolyte composition according to any one of claims 7 to 9.

**11.** A method for producing a polymer, comprising:

a step of polymerizing monomers including a monomer (A') represented by the following formula (A') and a second monomer including at least one of a monomer (B1') represented by the following formula (B1') and a monomer (B2') represented by the following formula (B2'),

[Chem. 8]

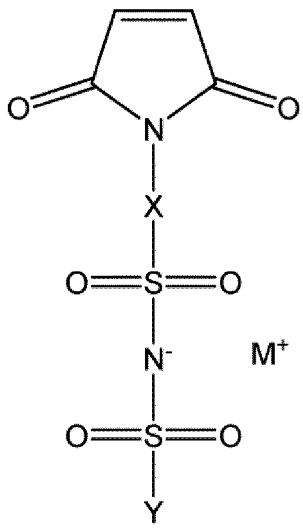

(A')

(in formula (A'), X is a divalent organic group having 1 to 20 carbon atoms, Y is a halogen atom or a monovalent organic group having 1 to 20 carbon atoms, and M is an alkali metal element selected from Li, Na and K),

[Chem. 9]

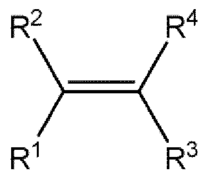

(B1')

(in formula (B1'), $R^1$ to $R^4$ are each independently a hydrogen atom, a halogen atom, or a monovalent organic group having 1 to 20 carbon atoms), and

[Chem. 10]

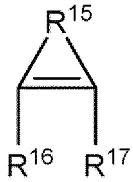

(B2')

(in formula (B2'), $R^{15}$ is a divalent organic group having 1 to 20 carbon atoms, and $R^{16}$ and $R^{17}$ are each a

hydrogen atom, a halogen atom, or a monovalent organic group having 1 to 20 carbon atoms, with the proviso that maleic anhydride and a monomer in the monomer (A') are not in the monomer (B2')).

**12.** A polymer obtained by polymerizing monomers including a monomer (A') represented by the following formula (A') and a second monomer including at least one of a monomer (B1') represented by the following formula (B1') and a monomer (B2') represented by the following formula (B2'),

[Chem. 11]

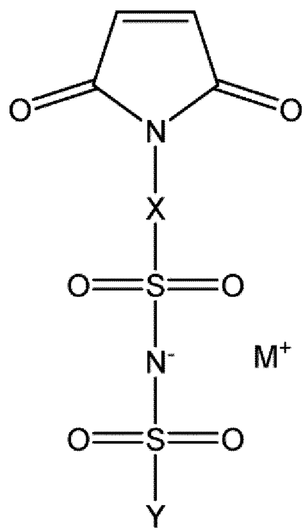

(A')

(in formula (A'), X is a divalent organic group having 1 to 20 carbon atoms, Y is a halogen atom or a monovalent organic group having 1 to 20 carbon atoms, and M is an alkali metal element selected from Li, Na and K),

[Chem. 12]

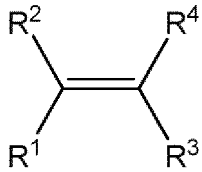

(B1')

(in formula (B1'), $R^1$ to $R^4$ are each independently a hydrogen atom, a halogen atom, or a monovalent organic group having 1 to 20 carbon atoms), and

[Chem. 13]

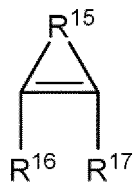

(B2')

(in formula (B2'), $R^{15}$ is a divalent organic group having 1 to 20 carbon atoms, and $R^{16}$ and $R^{17}$ are each a hydrogen atom, a halogen atom, or a monovalent organic group having 1 to 20 carbon atoms, with the proviso that maleic anhydride and a monomer in the monomer (A') are not in the monomer (B2')).

## INTERNATIONAL SEARCH REPORT

International application No.
**PCT/JP2022/043418**

**A. CLASSIFICATION OF SUBJECT MATTER**

***C08F 222/40***(2006.01)i; ***C08L 35/00***(2006.01)i; ***H01G 11/56***(2013.01)i; ***H01M 10/0565***(2010.01)i
FI: C08F222/40; C08L35/00; H01M10/0565; H01G11/56

According to International Patent Classification (IPC) or to both national classification and IPC

**B. FIELDS SEARCHED**

Minimum documentation searched (classification system followed by classification symbols)

C08F222/40; C08L35/00; H01G11/56; H01M10/0565

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2007/125845 A1 (NATIONAL UNIVERSITY CORPORATION YOKOHAMA NATIONAL UNIVERSITY) 08 November 2007 (2007-11-08)<br>claims, paragraphs [0013]-[0014], [0021], examples | 1-12 |
| X | JP 2021-88695 A (BELENOS CLEAN POWER HOLDING AG) 10 June 2021 (2021-06-10)<br>claims, examples | 1-10 |
| X | JP 2016-118619 A (TOYO INK SC HOLDINGS CO LTD) 30 June 2016 (2016-06-30)<br>claims, paragraphs [0034], [0038]-[0047], [0064], table 3 | 1-6, 11-12 |
| A | JP 2014-529863 A (UNIVERSITE D'AIX-MARSEILLE) 13 November 2014 (2014-11-13)<br>claims, examples | 1-12 |
| A | JP 2020-515558 A (HYDRO-QUEBEC) 28 May 2020 (2020-05-28)<br>claims, examples | 1-12 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **09 December 2022** | **27 December 2022** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**
**Information on patent family members**

International application No.
**PCT/JP2022/043418**

| Patent document cited in search report | Publication date (day/month/year) | Patent family member(s) | Publication date (day/month/year) |
|---|---|---|---|
| WO 2007/125845 A1 | 08 November 2007 | (Family: none) | |
| JP 2021-88695 A | 10 June 2021 | US 2021/0163649 A1<br>claims, examples<br>EP 3832757 A1<br>CN 112898457 A<br>KR 10-2021-0070189 A | |
| JP 2016-118619 A | 30 June 2016 | (Family: none) | |
| JP 2014-529863 A | 13 November 2014 | US 2014/0272600 A1<br>claims, examples<br>WO 2013/034848 A1<br>EP 2753656 A1<br>CN 103874724 A<br>KR 10-2014-0061501 A | |
| JP 2020-515558 A | 28 May 2020 | US 2020/0087262 A1<br>claims, examples<br>WO 2018/176134 A1<br>EP 3601233 A1<br>CN 110461823 A<br>KR 10-2019-0134691 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 108878777


### Non-patent literature cited in the description


- **LI et al.** Single Ion Conducting Lithium Sulfur Polymer Batteries with Improved Safety and Stability. *Journal of Materials Chemistry A,* 2018, vol. 6, 14330-14338
- **DU et al.** Water-Insoluble Side-Chain-Grafted Single Ion Conducting Polymer Electrolyte for Long-Term Stable Lithium Metal Secondary Batteries. *ACS Applied Energy Materials,* 2020, vol. 3, 1128-1138